(19) Europäisches Patentamt
European Patent Office
Office européen des brevets

(11) **EP 4 507 019 A1**

(12) **EUROPEAN PATENT APPLICATION**
published in accordance with Art. 153(4) EPC

(43) Date of publication:
**12.02.2025 Bulletin 2025/07**

(21) Application number: **22963994.3**

(22) Date of filing: **04.11.2022**

(51) International Patent Classification (IPC):
*H01M 4/13* (2010.01)     *H01M 10/0525* (2010.01)

(52) Cooperative Patent Classification (CPC):
**H01M 4/13; H01M 10/0525**

(86) International application number:
**PCT/CN2022/129727**

(87) International publication number:
**WO 2024/092684 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
Co., Limited
Ningde, Fujian 352100 (CN)**

(72) Inventors:
• JIN, Chao
  **Ningde, Fujian 352100 (CN)**
• YE, Yonghuang
  **Ningde, Fujian 352100 (CN)**
• REN, Miaomiao
  **Ningde, Fujian 352100 (CN)**
• YAN, Guanfusheng
  **Ningde, Fujian 352100 (CN)**

(74) Representative: **Ziebig Hengelhaupt Intellectual
Property Attorneys
Patentanwaltskanzlei PartGmbB
Leipziger Straße 49
10117 Berlin (DE)**

(54) **POSITIVE ELECTRODE SHEET, SECONDARY BATTERY AND ELECTRIC APPARATUS**

(57)     Provided are a positive electrode sheet, a secondary battery, and an electrical device. The positive electrode sheet includes: a positive electrode current collector; a primer layer, located on at least one side of the positive electrode current collector, including a conductive agent and a binder; a positive electrode active substance layer, located on one side of the primer layer far away from the positive electrode current collector, including a positive electrode active material; wherein a thickness of the primer layer is denoted as L, and the thickness of the primer layer satisfies:

$$0.1 \leqslant \frac{L}{(Dv50-5)*(PD/3.5)} \leqslant 0.5$$

; wherein Dv50 represents a corresponding particle size when a cumulative particle size distribution number of particles in a volume distribution of the positive electrode active material reaches 50%, and a unit of Dv50 is $\mu$m; PD represents a compacted density of the positive electrode sheet, and a unit of PD is g/cm$^3$.

<u>4</u>

FIG.1

EP 4 507 019 A1

## Description

### FIELD

The present disclosure belongs to the field of secondary battery technology, and specifically relates to a positive electrode sheet, a secondary battery, and an electrical device.

### BACKGROUND

A secondary battery is widely used in all kinds of consumer electronic products and new energy vehicles due to outstanding features such as light weight, no pollution, and no memory effect. With a continuous development of new energy industry, customers have put forward higher demands for the use of the secondary battery. For example, an energy density design of the secondary battery is designed to be higher and higher.

In the related technologies, increasing a compacted density of a positive electrode sheet is one of the ways to improve the energy density of the secondary battery. However, the means of increasing the compacted density of the positive electrode sheet, while increasing the energy density, often leads to a destruction of an oxide film on a surface of an aluminum foil under high pressure, exposing fresh aluminum, making the electrolyte to corrode the aluminum foil, thereby causing battery safety problems.

### SUMMARY

In view of the technical problems existing in the background, the present disclosure provides a positive electrode sheet, a secondary battery and an electrical device, aiming at increasing the energy density of the secondary battery and improving the safety of the secondary battery at the same time.

In order to achieve the above-mentioned object, a first aspect of the present disclosure provides a positive electrode sheet, including:

a positive electrode current collector;
a primer layer, located on at least one side of the positive electrode current collector, including a conductive agent and a binder;
a positive electrode active substance layer, located on one side of the primer layer far away from the positive electrode current collector, including a positive electrode active material;
wherein a thickness of the primer layer is denoted as L, and the thickness of the primer layer satisfies:

$$0.1 \leqslant \frac{L}{(Dv50-5)*(PD/3.5)} \leqslant 0.5 \; ;$$

wherein Dv50 represents a corresponding particle size when a cumulative particle size distribution number of particles in a volume distribution of the positive electrode active material reaches 50%, and a unit of Dv50 is $\mu$m; PD represents a compacted density of the positive electrode sheet, and a unit of PD is g/cm$^3$.

Relative to the prior arts, the present disclosure at least includes the beneficial effects described below.

The positive electrode sheet of the present disclosure is provided with a primer layer. When the positive electrode active substance layer has a high compacted density, the primer layer may improve or even prevent an oxide film on the surface of an aluminum foil from being crushed by the positive electrode active material, thereby improving the safety of the secondary battery. In addition, by determining an appropriate thickness of the primer layer based on the compacted density of the positive electrode sheet and a volume average particle size Dv50 of the positive electrode active material, the oxide film on the surface of the aluminum foil may be protected without affecting the energy density of the secondary battery. In this way, when the above-mentioned positive electrode sheet is applied to the secondary battery, the energy density of the secondary battery may be increased and the safety of the secondary battery may be improved at the same time.

In any embodiment of the present disclosure, a nickel content in the positive electrode active material is ≥80%.

In any embodiment of the present disclosure, a volume average particle size Dv50 of the positive electrode active material is denoted as D4, and the volume average particle size Dv50 of the positive electrode active material satisfies: 5$\mu$m≤D4≤15$\mu$m; optionally, 5$\mu$m≤D4≤9$\mu$m.

In any embodiment of the present disclosure, a mass ratio of the binder and the conductive agent is (2-10):10.

In any embodiment of the present disclosure, the binder includes acrylic resin; optionally, the acrylic resin includes one or more of cross-linked polyacrylic acid, lithium polyacrylate, sodium polyacrylate, and polyacrylic acid-polyacrylonitrile copolymer.

In any embodiment of the present disclosure, the conductive agent includes one or more of acetylene black, carbon black, graphite, Ketjen black and graphene.

In any embodiment of the present disclosure, the primer layer further includes active substance particles.

In any embodiment of the present disclosure, a volume average particle size Dv10 of the active substance particles is denoted as D1, a volume average particle size Dv50 of the active substance particles is denoted as D2, a volume average particle size Dv90 of the active substance particles is denoted as D3, and the active substance particles satisfy: D2≤2μm, (D3-D1)/D2≥2.8.

In any embodiment of the present disclosure, a thickness of the primer layer satisfies:

$$0.1 \leq \frac{(L-D2)}{(Dv50-5)*(PD/3.5)} \leq 0.5$$

; wherein D2 represents the volume average particle size Dv50 of the active substance particles.

In any embodiment of the present disclosure, the active substance particles include one or more of a NCM ternary material, lithium iron phosphate, and a lithium supplement; optionally, the NCM ternary material has a chemical formula of $LiNi_xCo_yMn_{1-x-y}O_2$, wherein $0.3 \leq x \leq 1$ and $0 \leq y \leq 0.5$; optionally, the lithium supplement includes one or more of a lithium-containing oxide, a lithium-containing nitride, a lithium-containing sulfide, and a lithium-containing metalate.

In any embodiment of the present disclosure, a mass ratio of the binder, the conductive agent and the active substance particles is (2-10):10:(1-10).

In any embodiment of the present disclosure, the thickness of the primer layer satisfies: $0 < L \leq 5 \mu m$; optionally, $1 \leq L \leq 2 \mu m$.

In any embodiment of the present disclosure, the positive electrode active material includes lithium nickel cobalt manganese oxide.

In any embodiment of the present disclosure, the current collector is selected from the aluminum foil.

A second aspect of the present disclosure provides a secondary battery, including the positive electrode sheet according to the first aspect of the present disclosure.

In any embodiment of the present disclosure, the secondary battery further includes an electrolyte containing lithium bis(fluorosulfonyl)imide.

A third aspect of the present disclosure provides an electrical device, including the secondary battery according to the second aspect of the present disclosure.

## BRIEF DESCRIPTION OF THE DRAWINGS

In order to explain technical solutions of the present disclosure more clearly, the drawings used in the present disclosure are briefly described below. Obviously, the drawings as described below are merely some embodiments of the present disclosure. Based on these drawings, other drawings can be obtained by those skilled in the art without creative effort.

FIG.1 is a schematic diagram of a secondary battery of an embodiment.
FIG.2 is an exploded view of FIG.1.
FIG.3 is a schematic diagram of a battery pack of an embodiment.
FIG.4 is a schematic diagram of an electrical device of an embodiment in which a secondary battery is used as a power source.

Description of reference numerals:
1. battery pack; 2. upper box; 3. lower box; 4. secondary battery; 41. housing; 42. electrode assembly; 43. cover plate; 5. electrical device.

## DETAILED DESCRIPTION

The present disclosure will be further elaborated below in combination with specific embodiments. It should be understood that these specific embodiments are provided to illustrate the present disclosure and are not intended to limit the scope of the present disclosure.

For the sake of brevity, only certain numerical ranges are specifically disclosed herein. However, any lower limit may be combined with any upper limit to form an unspecified range; and any lower limit may be combined with any other lower limit to form an unspecified range. Similarly, any upper limit may be combined with any other upper limit to form an unspecified range. In addition, each individually disclosed point or individual numerical value can serve as a lower or upper limit by itself to form an unspecified range in combination with any other point or individual numerical value or with other lower or upper limits.

The "range" disclosed in the present disclosure is defined by a lower limit and an upper limit, and a given range is defined by selecting a lower limit and an upper limit, while the selected lower limit and upper limit define the boundaries of a particular range. A range defined in such a manner may include or not include the end values, which may be arbitrarily combined. That is, any lower limit may be combined with any upper limit to form a range. For example, if ranges of 60 to 120 and 80 to 110 are specified for a particular parameter, it can be understood that ranges of 60 to 110 and 80 to 120 are also expected. Further, if the minimum range values 1 and 2 are listed and the maximum range values 3, 4, and 5 are listed, all the following ranges may be expected: 1 to 3, 1 to 4, 1 to 5, 2 to 3, 2 to 4, and 2 to 5. In the present disclosure, unless otherwise stated, a numerical range of "a to b" means an abbreviated representation of a combination of any real numbers between a and b, where a and b are both real numbers. For example, a numerical range "0 to 5" means that all real numbers between 0 and 5 are all listed herein, and "0 to 5" is merely an abbreviated representation of combinations of these numbers. In addition, when it is recited that a certain parameter is an integer which is more than or equal to 2, it is equivalent to disclosing that the parameter is, for example, an integer of 2, 3, 4, 5, 6, 7, 8, 9, 10, 11, or 12, etc.

All the embodiments and optional embodiments of the present disclosure may be combined with each other to form a new technical solution, unless otherwise stated.

All the technical features and optional technical features of the present disclosure may be combined with each other to form a new technical solution, unless otherwise stated.

All the steps of the present disclosure may be performed sequentially or may be performed randomly, and preferably sequentially, unless otherwise stated. For example, the method includes steps (a) and (b), and this indicates that the method may include steps (a) and (b) performed sequentially or may include steps (b) and (a) performed sequentially. For example, when it is mentioned that the method may further include a step (c), it indicates that the step (c) may be added to the method in any order, for example, the method may include steps (a), (b), and (c), and it may also include steps (a), (c), and (b) or may include steps (c), (a), and (b).

The phrase "include" and "comprise" mentioned in the present disclosure represent an open type or may be a closed type, unless otherwise stated. For example, the phrase "include" and "comprise" may indicate that other unlisted components can be further included or comprised, or only listed components are included or comprised.

In the description herein, it should be noted that, unless otherwise specified, the words "more than" and "less than" are inclusive of the present number, and the words "more" in the phrase "one or more" mean two or more than two.

In the description herein, unless otherwise stated, the term "or" is inclusive. That is, the phrase "A or B" means "A, B, or both A and B". More specifically, any of following conditions satisfies the condition "A or B": A is true (or present) and B is false (or not present); A is false (or not present) and B is true (or present); or both A and B are true (or present). Unless otherwise stated, terms used in the present disclosure have the well-known meanings generally understood by those skilled in the art. Unless otherwise stated, the values of the parameters mentioned in the present disclosure may be measured by various measuring methods commonly used in the art (e.g., they may be measured in accordance with the methods given in the examples of this disclosure).

With a continuous development of new energy industry, customers have put forward higher demands for an energy density of a secondary battery. In the related technologies, increasing a compacted density of a positive electrode sheet is one of ways to improve the energy density of the secondary battery. However, increasing the compacted density of the positive electrode sheet often leads to a destruction of an oxide film on a surface of an aluminum foil while increasing the energy density, thereby leading to battery safety problems.

In addition, since high-nickel ternary materials have high energy density, using high-nickel ternary materials as positive electrode materials is also one of the means to increase the energy density of the secondary battery in the related technologies. Due to a poor high-temperature structural stability of high-nickel ternary materials, oxygen release is prone to occur at high temperature, resulting in rapid decay of storage life of the secondary battery and a decrease in safety. When the high-nickel ternary material is used as a positive electrode material, the storage life and safety of the secondary battery may be effectively improved by adding lithium bis(fluorosulfonyl)imide (LiFSI) to an electrolyte. However, the electrolyte containing LiFSI is easy to corrode an aluminum foil under high pressure, which can easily cause brittle fracture of aluminum foil in a late stage of the cycle, which leads to safety accidents of the secondary battery. In addition, the secondary battery has poor tolerance to shallow puncture resistance, poor stability of electrolyte under high pressure, and a high risk of overcharge failure. The technicians of the present disclosure analyzed and found that a main reason is that positive electrode material particles crush the aluminum foil under the high pressure density, and the oxide film on the surface of the aluminum foil is destroyed, exposing the fresh aluminum foil. The fresh aluminum foil reacts with the electrolyte, thereby resulting in corrosion of the aluminum foil and causing the safety accidents of the secondary battery.

A positive electrode sheet provided by the present disclosure includes: a positive electrode current collector, a primer layer located on at least one side of the positive electrode current collector, and a positive electrode active substance layer located on one side of the primer layer far away from the positive electrode current collector; the primer layer includes a conductive agent and a binder; the positive electrode active substance layer includes a positive electrode active material, a thickness of the primer layer is denoted as L, and the thickness of the primer layer satisfies:

$$0.1 \leqslant \frac{L}{(Dv50-5)*(PD/3.5)} \leqslant 0.5$$ ; wherein Dv50 represents a corresponding particle size when a cumulative particle size distribution number of particles in a volume distribution of the positive electrode active material reaches 50%, and a unit of Dv50 is $\mu$m; PD represents a compacted density of the positive electrode sheet, and a unit of PD is g/cm³.

It should be noted that the primer layer is located on at least one side of the positive electrode current collector, and the primer layer may be in contact with the positive electrode current collector or may not be in contact with the positive electrode current collector.

It should be noted that the positive electrode active substance layer may include one positive electrode active material, or include two or more positive electrode active material. If the positive electrode active substance layer includes two or more positive electrode active materials, Dv50 represents a corresponding particle size when a distribution number in a volume distribution of all positive electrode active materials reaches 50%.

When only the binder and the conductive agent are included in the primer layer, the thickness of the primer layer satisfies:
$$0.1 \leq \frac{L}{(Dv50-5)*(PD/3.5)} \leq 0.5$$
.

Without wishing to be limited to any theory, the positive electrode sheet of the present disclosure is provided with a primer layer. When the positive electrode active substance layer has a high compacted density, the primer layer can improve or even prevent the oxide film on the surface of the aluminum foil from being crushed by the positive electrode active material, thus improving the safety of the secondary battery; in addition, by determining a suitable thickness of the premier layer based on the compacted density of the positive electrode sheet and the volume average particle size Dv50 of the positive electrode active material, the oxide film on the surface of aluminum foil can be protected without affecting the energy density of the secondary battery. In this way, when the above-mentioned positive electrode sheet is applied to the secondary battery, the safety of the secondary battery may be improved and the energy density of the secondary battery is increased at the same time.

It should be noted that a physical meaning of the volume average particle size Dv50 is that the particles whose particle size is smaller (or larger) account for 50%. As an example, the volume average particle size Dv50 of the above-mentioned positive electrode active material may be conveniently measured using a laser particle size analyzer, such as a Mastersizer 2000E laser particle size analyzer of Malvern Instrument Co., Ltd of the United Kingdom, with reference to the GB/T 19077-2016 particle size distribution laser diffraction method.

The compacted density of the above-mentioned positive electrode sheet may be measured by the following method: an electrode sheet in an unit area is scraped off and weighted to obtain a coating surface density of the electrode sheet. After the electrode sheet is dried and cold-pressed, a total thickness of the electrode sheet is measured using a vernier caliper, and a coating thickness may be calculated by deducting the thickness of the current collector. According to two parameters of the coating surface density and the coating thickness, the compacted density of the electrode sheet may be calculated, based on a formula: compacted density = surface density / coating thickness. It should be noted that for the positive electrode sheet provided with the primer layer, the coating surface density is an integrated surface density of the primer layer and the positive electrode active substance layer, and the coating thickness is an integrated thickness of the primer layer and the positive electrode active substance layer.

The thickness of the above-mentioned primer layer may be measured by the following method: the cross-section CP of the positive electrode sheet is characterized, and the total thickness of the positive electrode sheet as well as the thickness of the positive electrode active substance layer and the thickness of the positive electrode current collector is measured. Then the thickness of the primer layer can be obtained, based on a formula: total thickness of the positive electrode sheet - thickness of the positive electrode active substance layer - thickness of the positive electrode current collector.

The present inventors after in-depth research have found that the positive electrode sheet of the present disclosure, on the basis of satisfying the above-mentioned design conditions, may further improve the energy density, kinetic performance, and shallow puncture safety of the secondary battery if the positive electrode sheet also optionally satisfies one or more of the following conditions.

In some embodiments, the nickel content in the positive electrode active material is ≥80%. The positive electrode sheet adopts high-nickel ternary material as the positive electrode active material. When such a positive electrode sheet is applied to the secondary battery, LiFSI is adaptively added to the electrolyte; if the positive electrode active material is in direct contact with the aluminum foil, and the compacted density of the positive electrode active substance layer is large, the positive electrode active material is easy to damage the oxide film on the surface of the aluminum foil, thereby exposing the fresh aluminum foil, and the LiFSI in the electrolyte reacts with the aluminum foil when it contacts the aluminum foil and corrodes the aluminum foil. The primer layer located between the positive electrode active substance layer and the positive electrode current collector may reduce or even avoid the damage of the oxide film on the surface of the aluminum foil caused by the positive electrode active substance particles when the compacted density is high, thus avoiding the corrosion of the aluminum foil due to the contact of the fresh aluminum foil with the electrolyte and improving the safety of the secondary battery.

The above-mentioned nickel content in the positive electrode active material may be measured by an ICAP6300 spectrometer.

In some embodiments, the volume average particle size Dv50 of the positive electrode active material is denoted as D4, and the volume average particle size Dv50 of the positive electrode active material satisfies: $5\mu m \leq D4 \leq 15\mu m$; for example, it may be $6\mu m \leq D4 \leq 15\mu m$, $7\mu m \leq D4 \leq 14\mu m$, $8\mu m \leq D4 \leq 13\mu m$, $9\mu m \leq D4 \leq 12\mu m$, $10\mu m \leq D4 \leq 11\mu m$ or $5\mu m \leq D4 \leq 13\mu m$, etc. When the volume average particle size Dv50 of the positive electrode active material is in the above range, if the compacted density of the positive electrode sheet is high and the positive electrode active substance layer is in direct contact with the positive electrode current collector, the positive electrode active substance particles are more likely to damage the oxide film on the surface of the aluminum foil. By arranging an primer layer between the positive electrode active substance layer and the positive electrode current collector, the damage to the oxide film on the surface of the aluminum foil by the positive electrode active material particles may be reduced or even avoided. Further, the volume average particle size Dv50 of the positive electrode active material satisfies: $5\mu m \leq D4 \leq 9\mu m$.

In some embodiments, a mass ratio of the binder and the conductive agent is (2-10):10; for example, the mass ratio of the binder and the conductive agent may be (2-9):10, (3-8):10, (4-7):10, (5-6):10, (4.5-5.5):10, or (5.5-6.5):10, etc. When the mass ratio of the binder and the conductive agent is within the given range, it can meet the shear strength requirement between the primer layer, the positive electrode current collector, and the positive electrode active substance layer, and at the same time, facilitate the filtration during the preparation of the primer slurry and reduce the solid content in the primer slurry.

In some embodiments, the binder includes acrylic resin; optionally, the acrylic resin includes one or more of cross-linked polyacrylic acid, lithium polyacrylate, sodium polyacrylate, and polyacrylic acid-polyacrylonitrile copolymer.

In some embodiments, the conductive agent includes one or more of acetylene black, carbon black, graphite, Ketjen black and graphene.

In some embodiments, the primer layer further includes active substance particles. The addition of the active substance particles in the primer layer may make the primer layer also play the role of capacity replenishment, thereby increasing an overall capacity of the secondary battery, and reducing or compensating for a loss of energy density caused by a provision of the primer layer.

Optionally, a volume average particle size Dv10 of the active substance particles is denoted as D1, a volume average particle size Dv50 of the active substance particles is denoted as D2, a volume average particle size Dv90 of the active substance particles is denoted as D3, and the active substance particles satisfy: $D2 \leq 2\mu m$, $(D3-D1)/D2 \geq 2.8$. When the volume average particle size Dv50 of the active substance particles exceeds the above-mentioned range, the active substance particles are also easy to crush the positive electrode current collector, so the thickness of the primer layer needs to be increased, thereby leading to a deterioration of the shear strength of the primer layer, a decrease of the energy density and an increase of DCR of the secondary battery, and at the same time, an increase of the cost. When (D3-D1)/D2 is lower than the above range, the active substance particles are easy to agglomerate, which can lead to a generation of filtration residue in the primer slurry, thereby leading to a deterioration of the shear strength of the primer layer. And the corrosion of the positive electrode current collector by the electrolyte will be further deteriorated, and at the same time, the DCR of the secondary battery will be increased. By adjusting the size of the active substance particles in the primer layer, the compression resistance of the primer layer can be improved, and a dense and thin coating may be obtained more easily, which is beneficial to improve the ability of the primer layer to resist mechanical damage, such as shallow puncture.

It should be noted that the volume average particle size Dv10 refers to a corresponding particle size when a cumulative particle size distribution number of the active substance particles reaches 10% in a cumulative volume distribution curve of the active substance particles. The volume average particle size Dv50 refers to a corresponding particle size when a cumulative particle size distribution number of the active substance particles reaches 50% in a cumulative volume distribution curve of the active substance particles. The volume average particle size Dv90 refers to a corresponding particle size when a cumulative particle size distribution number of the active substance particles reaches 90% in a cumulative volume distribution curve of the active substance particles. As an example, Dv10, Dv50, and Dv90 may be conveniently measured using a laser particle size analyzer, such as a Mastersizer 2000E laser particle size analyzer of Malvern Instrument Co., Ltd of the United Kingdom, with reference to the GB/T 19077-2016 particle size distribution laser diffraction method.

In some embodiments, when the primer layer also includes active substance particles, a thickness of the primer layer satisfies: $$0.1 \leq \frac{(L-D2)}{(Dv50-5)*(PD/3.5)} \leq 0.5$$ ; wherein D2 represents the volume average particle size Dv50 of the active substance particles.

In some embodiments, the active substance particles include one or more of a NCM ternary material, lithium iron phosphate, and a lithium supplement; optionally, the NCM ternary material has a chemical formula of $LiNi_xCo_yMn_{1-x-y}O_2$, wherein $0.3 \leq x \leq 1$ and $0 \leq y \leq 0.5$; optionally, the lithium supplement includes three types: one or more of binary lithium-containing compounds (such as $Li_2O$, $Li_2O_2$, $LiF$, $Li_2S$, $Li_3N$, etc.), ternary lithium-containing compounds ($Li_4FeO_5$, $Li_6CoO_4$, $Li_2NiO_2$, etc.), and organic lithium salts ($Li_2DHBN$, $Li_2C_2O_4$, etc.).

Optionally, the active substance particles may further include lithium-containing phosphates with an olivine structure, including, but be not limited to at least one of a composite material of lithium iron phosphate and carbon, lithium manganese phosphate (such as $LiMnPO_4$), a composite material of lithium manganese phosphate and carbon, lithium manganese iron phosphate, and a composite material of lithium manganese iron phosphate and carbon.

In some embodiments, a mass ratio of the binder, the conductive agent and the active substance particles is (2-10):10:(1-10); for example, the mass ratio of the binder, the conductive agent and the active substance particles may be (2-9):10:(2-10), (3-8):10:(4-7), (5-6):10:(4-8), (4.5-5.5):10:(5-7), (5.5-6.5):10:(5-6) or (5-10):10:(1-3), etc. When the mass ratio of the binder, the conductive agent and the active substance particles is within the given range, a stable slurry may be formed, and the film is well bonded. The addition of an appropriate amount of active materials helps the battery balance high volumetric energy density (VED) and safety.

In some embodiments, the thickness of the primer layer satisfies: $0<L\leq5\mu m$; for example, it may be $0.01\leq L\leq5\mu m$, $0.1\leq L\leq5\mu m$, $0.5\leq L\leq3.5\mu m$, $1\leq L\leq3\mu m$, $1.5\leq L\leq2.5\mu m$, $2\leq L\leq2.5\mu m$, $0.5\leq L\leq1\mu m$, $1.5\leq L\leq2\mu m$, and $1\leq L\leq1.5\mu m$, etc. When the thickness of the primer layer is within the given range, the damage of the aluminum foil caused by the positive electrode material particles can be effectively improved without affecting the energy density of the secondary battery. Optionally, the thickness of the primer layer satisfies: $1\leq L\leq2\mu m$.

In some embodiments, the positive electrode active material includes lithium nickel cobalt manganese oxide.

In some embodiments, the positive electrode active material may further include other positive electrode active materials well-known in the art for batteries. As an example, the positive electrode active material may include at least one of the following materials: lithium-containing phosphate with an olivine structure, lithium transition metal oxide, and their respective modified compounds. However, the present disclosure is not limited to these materials, and other conventional materials that can be used as the positive electrode active material of the batteryies can also be used. These positive electrode active materials can be used alone or in combination of two or more. Among them, the examples of lithium transition metal oxide may include, but is not limited to at least one of lithium cobalt oxide (such as $LiCoO_2$), lithium nickel oxide (such as $LiNiO_2$), lithium manganese oxide (such as $LiMnO_2$ and $LiMn_2O_4$), lithium nickel cobalt oxide, lithium manganese cobalt oxide, lithium nickel manganese oxide, lithium nickel cobalt aluminum oxide (such as $LiNi_{0.85}Co_{0.15}Al_{0.05}O_2$) and their modified compounds, etc. Examples of lithium-containing phosphate with an olivine structure may include, but is not limited to, at least one of lithium iron phosphate (such as $LiFePO_4$ (may also be abbreviated as LFP)), a composite material of lithium iron phosphate and carbon, lithium manganese phosphate (such as $LiMnPO_4$), a composite material of lithium manganese phosphate and carbon, lithium iron manganese phosphate, and a composite material of lithium iron manganese phosphate and carbon. The weight ratio of the positive electrode active material in the positive electrode film layer is 80 wt% to 100 wt%, based on the total weight of the positive electrode film layer.

The present disclosure further provides a preparation method of the primer slurry, including the following steps: dry-mixing the conductive agent, the binder and the active substance particles to obtain the homogeneously dispersed powder; adding deionized water and stirring slowly to pre-dissolution, and stirring at high-speed to obtain uniformly dispersed primer slurry.

In some embodiments, a solid content of the primer slurry is 5 wt% to 20 wt% and a viscosity at room temperature is 500 mPa· to 2000 mPa·s.

In some embodiments, the mass ratio of the binder, the conductive agent and the active substance particles in the primer slurry is (2-20):10:(1-10).

As an example, when preparing a slurry A, the binder is in the form of an aqueous solution of the binder having a solid content of 25%, and is used to prepare the slurry A with the conductive agent together. A sum of mass percentages of the binder, the conductive agent, the active substance particles and the deionized water in the finally prepared primer slurry is 100%.

In some embodiments, a metal foil or a composite current collector may be used as the positive electrode current collector. For example, as the metal foil, an aluminum foil may be used. The composite current collector may include a polymer material base layer and a metal layer formed on at least one surface of the polymer material base layer. The composite current collector may be formed by forming a metallic material (aluminum, aluminum alloy, nickel, nickel alloy, titanium, titanium alloy, silver and silver alloy, etc.) on a polymer material substrate (such as polypropylene (PP), polyethylene terephthalate (PET), polybutylene terephthalate (PBT), polystyrene (PS), polyethylene (PE), and other substrates).

The positive electrode active substance layer typically further optionally includes the binder, the conductive agent, and other optional additives.

As an example, the binder may include at least one of polyvinylidene fluoride (PVDF), polytetrafluoroethylene (PTFE), polyvinylidene fluoride-tetrafluoroethylene-propylene terpolymer, polyvinylidene fluoride-hexafluoropropylene-tetrafluoroethylene terpolymer, tetrafluoroethylene-hexafluoropropylene copolymer, and fluorine-containing acrylate resin. The weight ratio of the binder in the positive electrode active substance layer is 0-20 wt%, based on the total weight of the positive electrode active substance layer.

As an example, the conductive agent may include at least one of superconducting carbon, acetylene black, carbon black, Ketjen black, carbon dots, carbon nanotubes, graphene, and carbon nanofibers. The weight ratio of the conductive agent in the positive electrode active substance layer is 0-20 wt%, based on the total weight of the positive electrode active substance layer.

As an example, the positive electrode sheet may be prepared in the following manner:

dispersing the above-mentioned components used for preparing the positive electrode sheet, such as the positive electrode active material, the conductive agent, the binder, and any other components, in a solvent (such as N-methylpyrrolidone) to form a positive electrode slurry, wherein the solid content of positive electrode slurry is 40-80 wt%, and the viscosity at room temperature is adjusted to 5000-25000mPa·s;

coating the surface of the positive electrode current collector with the primer slurry, and drying to form a primer layer; coating the surface of the primer layer with the positive electrode slurry, drying, and cold-pressing by a cold rolling mill to form a positive electrode sheet; the unit area density of the positive electrode powder coating is 150-350 mg/m$^2$, and the compacted density of the positive electrode sheet is 3.0-3.6 g/cm$^3$, optionally 3.3-3.5 g/cm$^3$.

All of the above-mentioned raw materials that are not specified are available commercially.

Secondary battery

A secondary battery refers to a battery that can be continuously used by activating an active material by means of charging after the battery is discharged.

Generally, the secondary battery includes a positive electrode sheet as provided above in the present disclosure, a negative electrode sheet, a separator, and an electrolyte. During charging and discharging of the battery, active ions are intercalated and deintercalated between the positive electrode sheet and the negative electrode sheet. The separator is arranged between the positive electrode sheet and the negative electrode sheet, playing the role of isolation. The electrolyte between the positive electrode sheet and the negative electrode sheet serves to conduct active ions.

Negative electrode sheet

The negative electrode sheet includes a negative electrode current collector and a negative electrode film layer disposed on at least one surface of the negative electrode current collector, the negative electrode film layer includes a negative electrode active material.

As an example, the negative electrode current collector has two surfaces opposed to each other in its own thickness direction. The negative electrode film layer is arranged on either or both of the two surfaces opposed to each other of the negative electrode current collector.

In some embodiments, the negative current collector may be a metal foil or a composite current collector. For example, as the metal foil, a copper foil may be used. The composite current collector may include a polymer material base layer and a metal layer formed on at least one surface of the polymer material substrate. The composite current collector may be formed by forming a metallic material (copper, copper alloy, nickel, nickel alloy, titanium, titanium alloy, silver, silver alloy, etc.) on a substrate of a polymer material (such as a substrate of polypropylene (PP), polyethylene terephthalate (PET), polybutylene terephthalate (PBT), polystyrene (PS), polyethylene (PE), etc.).

In some embodiments, the negative electrode active material can be a negative electrode active material known in the art for batteries. As an example, the negative electrode active material may include at least one of the following materials: artificial graphite, natural graphite, soft carbon, hard carbon, silicon-based materials, tin-based materials and lithium titanate, etc. The silicon-based material may be selected from at least one of elemental silicon, silicon-oxygen compounds, silicon-carbon complexes, silicon-nitrogen complexes, and silicon alloys. The tin-based material may be selected from at least one of elemental tin, tin oxide compounds, and tin alloys. However, the present disclosure is not limited to these materials, and other conventional materials that can be used as a negative electrode active material for a battery can also be used. These negative electrode active materials may be used alone or in combination of two or more. The weight ratio of the negative electrode active material in the negative electrode film layer is 70-100 wt%, based on the total weight of the negative electrode film layer.

In some embodiments, the negative electrode film layer may further optionally include a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethylmethacrylic acid (PMAA), and carboxymethyl chitosan (CMCS). The weight ratio of the binder in the negative electrode film layer is 0-30 wt%, based on the total weight of the negative electrode film layer.

In some embodiments, the negative electrode film layer further optionally includes a conductive agent. The conductive agent may be selected from at least one of superconducting carbon, acetylene black, carbon black, Ketjen black, carbon dots, carbon nanotubes, graphene and carbon nanofibers. The weight ratio of the conductive agent in the negative electrode film layer is 0-20 wt%, based on the total weight of the negative electrode film layer.

In some embodiments, the negative electrode film layer may optionally include other additives, such as thickeners (such as sodium carboxymethylcellulose (CMC-Na)) and the like. The weight ratio of the other additives in the negative electrode film layer is 0-15 wt%, based on the total weight of the negative electrode film layer.

In some embodiments, the negative electrode sheet can be prepared in the following manner: dispersing the above-mentioned components used for preparing the negative electrode sheet, such as negative electrode active material, conductive agent, binder and any other components in a solvent (such as deionized water) to form a negative electrode slurry, wherein a solid content of the negative electrode slurry is 30-70wt%, and the viscosity at room temperature is adjusted to 2000-10000 mPa·s; coating the negative electrode current collector with the obtained negative electrode slurry, obtaining an negative electrode sheet after drying and cold-pressing such as roll pressing. The unit area density of the negative electrode powder coating is 75-220 $mg/m^2$, and the compacted density of the negative electrode sheet is 1.2-2.0 $g/cm^3$.

Electrolyte

The electrolyte serves to conduct ions between the positive electrode sheet and the negative electrode sheet. The type of electrolyte is not specifically limited in the present disclosure, and can be selected according to requirements. For example, the electrolyte can be liquid, gel, or all-solid.

In some embodiments, the electrolyte employs an electrolyte solution. The electrolyte solution includes an electrolyte salt and a solvent.

In some embodiments, the electrolyte solution contains lithium bisfluorosulfonimide (LiFSI).

In some embodiments, the electrolyte salt can also be selected from one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis-trifluoromethyl sulfonimide (LiTFSI), lithium triflate (LiTFS), lithium difluorooxalato borate (LiDFOB), lithium bis(oxalato) borate (LiBOB), lithium difluorophosphate ($LiPO_2F_2$), lithium difluoro bis(oxalato) phosphate (LiDFOP), and lithium tetrafluorooxalato phosphate (LiTFOP). The concentration of the electrolyte salt is typically 0.5-5 mol/L.

In some embodiments, the solvent can be selected from one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and diethyl sulfone (ESE).

In some embodiments, the electrolyte solution further optionally includes an additive. For example, the additive may include a negative electrode film-forming additive, a positive electrode film-forming additive, and may further include an additive capable of improving certain properties of the battery, for example, an additive for improving overcharge properties of the battery, an additive for improving high-temperature or low-temperature properties of the battery, etc.

Separator

In some embodiments, the secondary battery may include a separator. The type of the separator is not particular limited in the present disclosure. Any known porous structure separator having good chemical stability and mechanical stability may be selected.

In some embodiments, the material of the separator may be selected from at least one of glass fiber, non-woven fabric, polyethylene, polypropylene, and polyvinylidene fluoride. The separator may be a single-layer film or a multi-layer composite film, without particular limitation. When the separator is a multilayer composite film, the materials of each layer may be the same or different, without particular limitation.

In some embodiments, the thickness of the separator is 6-40μm, optionally 12-20μm.

In some embodiments, the secondary battery of the present disclosure is a lithium-ion secondary battery.

In some embodiments, the electrode assembly may be made with the positive electrode sheet, the negative electrode sheet and the separator by a winding process or a lamination process.

In some embodiments, the secondary battery may include an outer package. The outer package may be used to encapsulate the electrode assembly and the electrolyte.

In some embodiments, the outer package of the secondary battery may be a hard case such as a hard plastic case, an aluminum case, a steel case, and the like. The outer package of the secondary battery may also be a soft package, such as a pouch-type package. The material of the soft package may be plastic, as plastic, polypropylene, polybutylene terephthalate, polybutylene succinate, etc may be listed.

The secondary battery may be prepared according to the conventional methods in this field, such as winding (or stacking) the positive electrode sheet, the separator, and the negative electrode sheet in a sequential manner, so that the separator is between the positive electrode sheet and the negative electrode sheet and plays the role of isolation, and obtaining the battery cell, and then placing the battery cell in the outer package, injecting the electrolyte solution, and sealing, and obtaining the secondary battery.

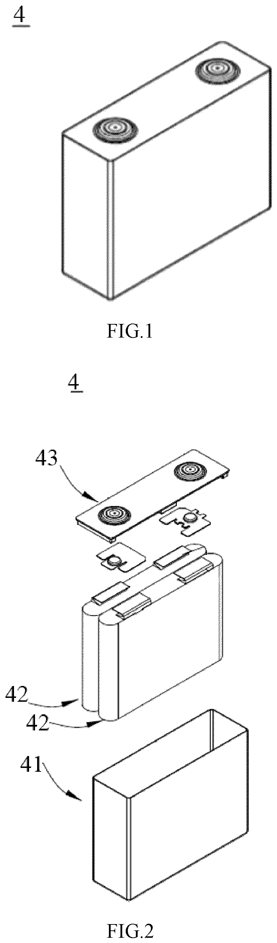

The shape of the secondary battery is not particularly limited in the embodiments of the present disclosure, and may be cylindrical, square or any other shape. For example, FIG. 1 is a secondary battery 4 having a square structure as one example.

In some embodiments, referring to FIG.2, the outer package may include a housing 41 and a cover plate 43. Wherein, the housing 41 may include a bottom plate and a side plate connected to the bottom plate, the bottom plate and the side plate are enclosed to form a receiving cavity. The housing 41 has an opening communicating with the receiving cavity. The cover plate 43 may be covered on the opening to enclose the receiving cavity.

The positive electrode sheet, the negative electrode sheet, and the separator may be formed the electrode assembly 42 by a winding process or a lamination process. An electrode assembly 42 is encapsulated within the receiving cavity. The electrolyte is infiltrated into the electrode assembly 42. The number of the electrode assemblies 42 contained in the secondary battery 4 may be one or more, and the number can be adjusted according to requirements.

In some embodiments, the secondary battery may be assembled into a battery module, and the number of the secondary battery contained in the battery module may be one or more, and the specific number may be selected by those skilled in the art according to the application and capacity of the battery module. In the battery module, a plurality of secondary battery may be provided in a sequential arrangement in a length direction of the battery module. Of course, the plurality of secondary battery may also be arranged in any other arbitrary manner. Further, the plurality of secondary batteries may be fixed by fasteners. The battery module may further include a housing having an accommodation space in which the plurality of secondary batteries are accommodated.

In some embodiments, the above-mentioned battery module may further be assembled into a battery pack, and the number of battery modules contained in the battery pack may be one or more, and the specific number may be selected by those skilled in the art according to the application and capacity of the battery pack.

In some embodiments, the above-mentioned secondary batteries may further be assembled into a battery pack, and the number of secondary batteries contained in the battery pack can be adjusted according to the application and capacity of the battery pack.

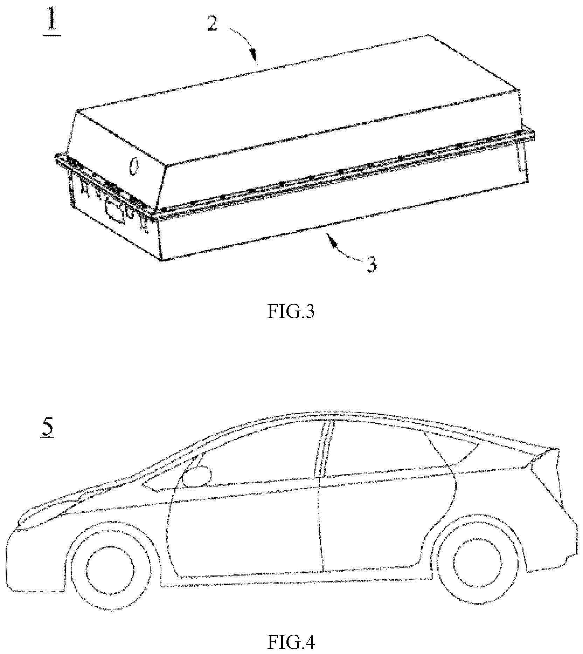

FIG.3 shows a battery pack 1 as one example. The battery pack 1 may include a battery box and a plurality of secondary batteries or battery modules disposed in the battery box. The battery box includes an upper box body 2 and a lower box body 3. The upper box body 2 can cover the lower box body 3 and form an enclosed space for accommodating the secondary batteries or battery modules. The plurality of secondary batteries or battery modules may be arranged in the battery box in an arbitrary manner.

Electrical device

The present disclosure also provides an electrical device including at least one of the secondary battery, the battery module, or the battery packs provided herein. The secondary battery, the battery module, or the battery pack may be used as a power source for the device as well as an energy storage unit for the device. The electrical device may include, but is not limited to, mobile equipments (e.g. cell phones, notebook computers, etc.), electric vehicles (e.g. pure electric vehicles, hybrid electric vehicles, plug-in hybrid electric vehicles, electric bicycles, electric scooters, electric golf carts, electric trucks, etc.), electric trains, ships and satellites, and energy storage systems, etc.

The device may select a secondary battery, a battery module, or a battery pack according to its usage requirements.

FIG.4 is an electrical device 5 as an example. The electrical device 5 is a pure electric vehicle, a hybrid electric vehicle, or a plug-in hybrid electric vehicle. To meet the requirements of the device for high power and high energy density of the secondary battery, a battery pack may be employed.

As another example, the device may be a cell phone, a tablet computer, a notebook computer, etc. The device is generally required to be light and thin. A secondary battery may be used as a power source.

The beneficial effects of the present disclosure are further described below in conjunction with the examples.

[Examples]

In order to make the technical problems solved by the present disclosure, technical solutions and beneficial effects more clear, further detailed description will be given below in conjunction with the examples and accompanying drawings. Apparently, the described examples are only a part of of the examples of the present disclosure, not all of them. The following description of at least one exemplary example is merely illustrative in nature and in no way serves as any limitation on the present disclosure and its application. Based on the examples in this present disclosure, all other examples obtained by persons of ordinary skill in the art without making creative efforts fall within the scope of protection of this disclosure. All materials used in examples and comparative examples of the present disclosure can be obtained commercially.

**I. Preparation of the positive electrode sheet**

Example 1

10g of conductive agent acetylene black (as a conductive agent) and 40g of cross-linked polyacrylic acid solution (as a binder, with a solid content of 25%) were mixed to prepare slurry A; 10g of lithium iron phosphate (LFP, as active substance particles) was dissolved in deionized water, and fully dissolved to prepare slurry B; the slurry A was added to the slurry B, and after fully stirring and mixing, the primer slurry was obtained. The primer slurry was filtered, the filtration residue content in the primer slurry and the filtration time of the primer slurry were shown in Table 1. The positive electrode current collector was uniformly coated with the filtered primer slurry and dried to obtain a substrate with primer layer.

Wherein, the volume average particle size Dv50 of lithium iron phosphate particles (as active substance particles) is $2\mu m$, and (volume average particle size Dv90 - volume average particle size Dv10) / volume average particle size Dv50 = 2.8; the thickness of the primer layer is $3\mu m$; the shear strength of the primer layer is 15Mpa.

The positive electrode active material $LiNi_{0.50}Co_{0.06}Mn_{0.44}O_2$, the conductive agent acetylene black, and the binder polyvinylidene fluoride (PVDF) were dissolved in the solvent N-methylpyrrolidone (NMP) at a weight ratio of 96.5:1.5:2, after fully stirring and mixing, he positive electrode slurry was obtained; then the positive electrode current collector with a primer was coated with the positive electrode slurry uniformly, and then after drying, cold pressing and cutting, the positive electrode sheet was obtained.

Examples 2-11

The preparation method of the positive electrode sheet in Examples 2-11 was basically similar to the preparation method of the positive electrode sheet in example 1, and the difference was that at least one of the type and/or amount of the conductive agent, the type and/or amount of the binder, the type and/or amount of the active substance particles, and the thickness of the primer layer used in the preparation of the substrate with the primer layer was different, as described in detail in Table 1.

Example 12

The preparation method of the positive electrode sheet in Example 12 was basically similar to the preparation method of the positive electrode sheet in Example 2, and the difference was that: when preparing the positive electrode active substance layer, the positive electrode sheet active material used was LiNi0.80Co0.12Mn0.08O2, and everything else was the same.

Example 13

The preparation method of the positive electrode sheet in Example 13 was basically similar to the preparation method of the positive electrode sheet in Example 2, and the difference mainly lies in that: when preparing the positive electrode active substance layer, the positive electrode sheet active material used is $LiNi_{0.90}Co_{0.08}Mn_{0.02}O_2$, and everything else is the same.

Comparative Examples 1-9

The positive electrode sheets in Comparative Examples 1-9 were not provided with a primer layer, and were prepared as follows: the positive electrode active material NCM, the conductive agent acetylene black, and the binder polyvinylidene fluoride (PVDF) were dissolved in the solvent N-methylpyrrolidone (NMP) at a weight ratio of 96.5:1.5:2, after fully stirring and mixing, the positive electrode slurry was obtained; then the positive electrode current collector was uniformly coated with the positive electrode slurry, and then the positive electrode sheet was obtained after drying, cold pressing and cutting.

It should be noted that the compacted density of the positive electrode sheet in the above-mentioned examples and comparative examples may be measured by the following method: an electrode sheet in an unit area was scraped off and weighted to obtain a coating surface density of the electrode sheet. After the electrode sheet was dried and cold-pressed, a total thickness of the electrode sheet was measured using a vernier caliper, and a coating thickness may be calculated by deducting the thickness of the current collector. According to two parameters of the coating surface density and the coating thickness, the compacted density of the electrode sheet may be calculated, based on a formula:

compacted density = surface density / coating thickness. It should be noted that for the positive electrode sheet provided with the primer layer, the coating surface density was an integrated surface density of the primer layer and the positive electrode active substance layer, and the coating thickness is an integrated thickness of the primer layer and the positive electrode active substance layer. For the positive electrode sheet without the primer layer, the coating surface density was a surface density of the positive electrode active substance layer, and the coating thickness was a thickness of the positive electrode active substance layer.

The thickness of the primer layer in above-mentioned each examples may be measured by the following method: the cross-section CP of the positive electrode sheet was characterized, and the total thickness of the positive electrode sheet as well as the thickness of the positive electrode active substance layer and the thickness of the positive electrode current collector was measured. Then the thickness of the primer layer was obtained, based on a formula: total thickness of the positive electrode sheet = thickness of the positive electrode active substance layer - thickness of the positive electrode current collector.

D1, D2, D3, D4 in the above-mentioned each example and D4 in each comparative example may be conveniently measured using a laser particle size analyzer, such as a Mastersizer 2000E laser particle size analyzer of Malvern Instrument Co., Ltd of the United Kingdom, with reference to the GB/T 19077-2016 particle size distribution laser diffraction method.

The shear strength of the primer layer in each of the above examples may be measured by the following method: the electrode sheet to be tested was taken, and a sample with a width of 20mm and a length of 100mm was punched using a die-cutting tool. A steel plate with a flat appearance was selected, the surface of the steel plate was wiped with cotton gauze dipped in alcohol, and dried. The double-sided adhesive tape was bonded to the steel plate, and the distance between the bottom edge of the tape and the bottom edge of the steel plate was > 1cm. The release paper on the upper layer of the tape was gently scraped off with a blade. The crepe tape was sticked on the circumference of the end of the intercepted electrode sheet sample, and then sticked on the double-sided tape, with the test side facing down, and rolled back and forth 3 times with a 2kg roller. Turn on the power of the tensile machine, the indicator light is on, and adjust the limit block to a suitable position. Fix the end of the steel plate that is not attached to the electrode sheet with the lower clamp. The upper clamp was clamped at the crepe tape position. Turn on the dedicated computer linked to the tensile machine, and double-click the "U60" software icon on the desktop. Set the parameters of the tension machine. The test speed was 10mm/min. When the peak of the test curve appeared, the electrode sheet was completely separated from the steel plate, and the test was automatically stopped. The raw data was exported. The peak value of the curve was selected as the maximum shear force Fs(N) of the electrode sheet, and the shear strength of the electrode sheet was calculated according to $Q=Fs/S$, in Mpa.

The filtration time of the primer slurry, the filtration residue content, the compacted density of the positive electrode sheet, the shear strength of the primer layer, and the volume average particle size Dv50 of the positive electrode active material in the preparation of the positive electrode sheet of each of above-mentioned examples and comparative examples were shown in Table 1 respectively.

Table 1

| Groups | Conductive agent (g) | Binder(g) | Active substance particles | | | Add deionized water to(g) | Filtration time | Filtration residue content(%) | L ($\mu$m) | PD (g/cm$^3$) | D4 ($\mu$m) | Sheer strength(Mpa) |
|---|---|---|---|---|---|---|---|---|---|---|---|---|
| | | | Types (g) | D2 ($\mu$m) | SPAN | | | | | | | |
| Example 1 | acetylene black 10 | cross-linked polyacrylic acid 10 | lithium iron phosphate 10 | 2 | 2.8 | 100 | 60 | 0 | 3 | 3.5 | 9 | 0.9 |
| Example 2 | acetylene black 10 | cross-linked polyacrylic acid 10 | lithium iron phosphate 10 | 1 | 2.8 | 100 | 60 | 0 | 2 | 3.5 | 9 | 0.9 |
| Example 3 | acetylene black 10 | cross-linked polyacrylic acid 10 | lithium iron phosphate 10 | 3 | 2.8 | 100 | 60 | 0 | 5 | 3.5 | 9 | 0.9 |
| Example 4 | acetylene black 10 | cross-linked polyacrylic acid 10 | lithium iron phosphate 10 | 1 | 2 | 100 | 100 | 1 | 2 | 3.5 | 9 | 0.8 |
| Example 5 | acetylene black 10 | cross-linked polyacrylic acid 10 | lithium iron phosphate 10 | 1 | 3 | 100 | 40 | 0 | 2 | 3.5 | 9 | 1.1 |
| Example 6 | acetylene black 10 | cross-linked polyacrylic acid 10 | lithium iron phosphate 5 | 1 | 2.8 | 100 | 60 | 0 | 2 | 3.5 | 9 | 0.9 |
| Example 7 | acetylene black 10 | cross-linked polyacrylic acid 10 | lithium iron phosphate 20 | 1 | 2.8 | 100 | 60 | 0 | 2 | 3.5 | 9 | 0.8 |

(continued)

| Groups | Conductive agent (g) | Binder(g) | Active substance particles | | | Add deionized water to(g) | Filtration time | Filtration residue content(%) | L (µm) | PD (g/cm³) | D4 (µm) | Sheer strength(Mpa) |
| --- | --- | --- | --- | --- | --- | --- | --- | --- | --- | --- | --- | --- |
| | | | Types (g) | D2 (µm) | SPAN | | | | | | | |
| Example 8 | acetylene black 10 | cross-linked polyacrylic acid 20 | lithium iron phosphate 10 | 1 | 2.8 | 100 | 120 | 2 | 2 | 3.5 | 9 | 1.2 |
| Example 9 | acetylene black 10 | cross-linked polyacrylic acid 2 | lithium iron phosphate 10 | 1 | 2.8 | 100 | 60 | 0 | 2 | 3.5 | 9 | 0.9 |
| Example 10 | acetylene black 10 | cross-linked polyacrylic acid 1 | lithium iron phosphate 10 | 1 | 2.8 | 100 | 110 | 1 | 2 | 3.5 | 9 | 0.5 |
| Example 11 | acetylene black 10 | cross-linked polyacrylic acid 10 | / | / | / | 100 | 60 | 0 | 2 | 3.5 | 9 | 0.8 |
| Example 12 | acetylene black10 | cross-linked polyacrylic acid 10 | lithium iron phosphate 10 | 1 | 2.8 | 100 | 60 | 0 | 2 | 3.5 | 9 | 0.9 |
| Example 13 | acetylene black10 | cross-linked polyacrylic acid 10 | lithium iron phosphate 10 | 1 | 2.8 | 100 | 60 | 0 | 2 | 3.5 | 9 | 0.9 |
| Comparative Example 1 | / | / | / | / | / | / | / | / | / | 3.6 | 4 | / |
| Comparative Example 2 | / | / | / | / | / | / | / | / | / | 3.6 | 15 | / |
| Comparative Example 3 | / | / | / | / | / | / | / | / | / | 3.5 | 9 | / |

(continued)

| Groups | Conductive agent (g) | Binder(g) | Active substance particles | | | Add deionized water to(g) | Filtration time | Filtration residue content(%) | L (μm) | PD (g/cm³) | D4 (μm) | Sheer strength(Mpa) |
|---|---|---|---|---|---|---|---|---|---|---|---|---|
| | | | Types (g) | D2 (μm) | SPAN | | | | | | | |
| Comparative Example 4 | / | / | / | / | / | / | / | / | / | 3.7 | 9 | / |
| Comparative Example 5 | / | / | / | / | / | / | / | / | / | 3.6 | 9 | / |
| Comparative Example 6 | / | / | / | / | / | / | / | / | / | 3.6 | 9 | / |
| Comparative Example 7 | / | / | / | / | / | / | / | / | / | 3.6 | 9 | / |
| Comparative Example 8 | / | / | / | / | / | / | / | / | / | 3.6 | 9 | / |
| Comparative Example 9 | / | / | / | / | / | / | / | / | / | 3.6 | 9 | / |

Wherein, in table 1, D1 represents the volume average particle size Dv10 of active substance particles, D2 represents the volume average particle size Dv50 of active substance particles, D3 represents the volume average particle size Dv90 of active substance particles, SPAN=(D3-D1)/D2; D4 represents the volume average particle size Dv50 of the positive electrode active material; PD represents the compacted density of the positive electrode sheet; L represents the thickness of the primer layer.

As can be seen from the filtration time of the primer slurry, the filtration residue content in the primer layer slurry, and the shear strength of the primer layer of each example in Table 1, when the mass ratio of the binder in the primer slurry was 2%-10%, the mass ratio of the conductive agent was 10%, the mass ratio of the active substance particles was 1%-10%, and the volume average particle size of the active substance particles Dv50 was $\leq 2\mu$m and SPAN was$\geq 2.8$, the filtration time of the primer slurry was suitable ($\leq$, 60s) and the primer slurry contained no filtration residue, and the shear strength of the primer layer can meet the bonding requirements ($\geq 0.7$Mpa).

The difference between Examples 2 and 8-10 in Table 1 was that the amount of the binder in the primer slurry was different; the amount of the binder in Example 8 was the largest, the amount of the binder in Example 10 was the smallest, the filtration time of the primer slurry in Example 8 and Example 10 was too long, and the primer slurry contained filtration residue. Technicians analyzed the reason, this may due to the fact that when the mass ratio of the binder in the primer slurry was higher than 10%, the viscosity of the primer slurry was too high, which can lead to prolonged filtration time of the primer slurry and the materials in the primer slurry were easy to agglomerate to form filtration residues; when the mass ratio of the binder in the primer slurry was less than 2%, due to the low viscosity of the primer slurry, the conductive agent and active substance particles in the primer slurry will occur powder agglomeration among themselves, which also leads to prolonged filtration time and inclusion of filtration residue of the primer slurry. In addition, when the mass ratio of the binder in the primer slurry was less than 2%, the shear strength of the primer layer was significantly reduced, which cannot meet the bonding requirements.

**II. Preparation of the battery**

1. Preparation of negative electrode sheet
Negative electrode active material graphite, silicon, conductive agent acetylene black, polymer, thickener sodium carboxymethyl cellulose (CMC) were dissolved in deionized water according to the weight ratio of 90:5:2:2:1, and mixed uniformly with the deionized water to prepare negative electrode slurry. Then the copper foil was coated with the negative electrode slurry dried, cold pressed and cut to obtain an anode electrode sheet.

2. Separator: polyethylene film (PE) was used as the separator, and the surface of the separator was coated with PVDF and aluminum oxide coating.

3. Preparation of electrolyte
The ethylene carbonate (EC), ethylmethyl carbonate (EMC), and diethyl carbonate (DEC) were mixed at a volume ratio of 1:1:1, and then LiPF6:LiFSI (2:8) was dissolved uniformly in the above solution, to obtain the electrolyte solution. In this electrolytic solution, the concentration of the lithium salt is 1 mol/L.

4. Preparation of the secondary battery: the positive electrode sheet, separator, and negative electrode sheet in each of the above-mentioned examples and comparative examples were stacked in order, so that the separator was located between the positive electrode sheet and negative electrode sheet to play an isolation role, and then winded to obtain the bare cell. the bare cell was welded with the tabs, and put into an aluminum case, and baked at 80°C to remove water, then the electrolyte was injected and sealed to get an uncharged battery. The uncharged battery was then subjected to standing, hot and cold pressing, forming, shaping, capacity testing and other processes in sequence to obtain a secondary battery.

**III. Performance test of the battery**

1. An energy density test of the secondary battery

Each of the prepared secondary battery was left to stand at 25°C for 30 minutes, charged to 4.25V at a rate of 1/3C, and ended at a constant voltage of 0.05C. The energy released when the battery was discharged to 2.8V at a rate of 1/3C after standing for 30 minutes was E0. The energy density of the secondary battery was calculated based on the formula: battery energy density = E0/cell volume; wherein the cell volume may be calculated by measuring the length, width, and height of the secondary battery.

2. Shallow puncture test

Each of the prepared secondary battery was discharged at 25°C to 2.8V at a rate of 1/3C, left to stand for 60 minutes, charged to 4.25V at a rate of 1/3C, and ended at a constant voltage of 0.05C; the battery was stood for 60 minutes, some of the housing was removed, and the voltage, internal resistance and weight of the battery at this time was recorded.

The nail piercing experiment was carried out at 25°C, the diameter of nail was 1 mm, the speed was 0.1 mm/s. The nail was pierced in the direction perpendicular to the battery electrode plate at a uniform speed and the piercing position was close to the geometric center of the pierced surface; the piercing depth was 4mm, and the pressure drop was monitored; it was observed for 1h in test environment; if there is no failure, the depth of piercing was changed to 5 mm, and the above steps were repeated until the failure; the voltage, internal resistance and weight of the battery at the time of failure were recorded.

3. Discharge DCR test of the second battery

Each of the prepared secondary battery was left to stand at 25°C for 30 minutes, charged to 4.25V at a rate of 1/3C, and ended at a constant voltage of 0.05C. The battery was left to stand for 10 minutes, discharged at a rate of 1/3C0 until the power of the cell was 50% of the full charge, which was called 50% SOC; the battery was left to stand for 60 minutes, discharged at a rate of 4°C for 10s, and the DCR value of the cell was recorded.

4. Corrosion risk factor

The positive electrode sheet is made of NCM ternary material with nickel content $\geq$80%. In the secondary battery containing LiFSI in the electrolyte, the positive electrode material particles crush the aluminum foil under high compacted density, and LiFSI corrodes the aluminum foil. The corrosion risk factor is recorded as S, then S=(V/4.2)* (PD/3.5) * (w/50%); wherein V represents the upper limit voltage used by the secondary battery, and w represents the mass ratio of LiFSI in the electrolyte solution; corrosion occurs when the corrosion risk factor is $\geq$1.

The performance test results of the secondary batteries prepared by each of the examples and comparative examples were shown in Table 2 below.

Table 2

| Group | V | w | Corrosion risk | ED/wh/L | DCR |
|---|---|---|---|---|---|
| Example1 | 4.2 | 80% | biased low | 90% | 120% |
| Example2 | 4.2 | 80% | low | 92% | 110% |
| Example3 | 4.2 | 80% | biased low | 88% | 130% |
| Example4 | 4.2 | 80% | biased low | 92% | 115% |
| Example5 | 4.2 | 80% | low | 92% | 110% |
| Example6 | 4.2 | 80% | low | 92% | 110% |
| Example7 | 4.2 | 80% | biased low | 95% | 110% |
| Example8 | 4.2 | 80% | low | 92% | 140% |
| Example9 | 4.2 | 80% | low | 92% | 110% |
| Example 10 | 4.2 | 80% | medium | 92% | 110% |
| Example 11 | 4.2 | 80% | low | 85% | 110% |
| Example12 | 4.2 | 80% | biased low | 95% | 107% |
| Example 13 | 4.2 | 80% | biased low | 102% | 98% |
| Comparative Example1 | 4.2 | 50% | medium | / | / |
| Comparative Example2 | 4.2 | 50% | high | / | / |
| Comparative Example3 | 4.2 | 50% | medium | / | / |
| Comparative Example4 | 4.2 | 50% | high | / | / |
| Comparative Example5 | 4.1 | 50% | low | / | / |
| Comparative Example6 | 4.3 | 50% | high | / | / |

(continued)

| Group | V | w | Corrosion risk | ED/wh/L | DCR |
|---|---|---|---|---|---|
| Comparative Example7 | 4.2 | 30% | low | / | / |
| Comparative Example8 | 4.2 | 80% | high | / | / |
| Comparative Example9 | 4.2 | 50% | biased high | 100% | 100% |

Wherein, ED in Table 2 represents energy density. Based on the measured energy density and discharge DCR of the secondary battery when the volume average particle size Dv50 of the positive electrode active material was $9 \mu m$, the compacted density of the positive electrode sheet was 3.6 g/cm$^3$, the mass ratio of LiFSI in the electrolyte was 50%, the upper limit voltage used in the secondary batteries was 4.2 v, and no primer layer was applied, the change percentages of the energy density and discharge DCR of the secondary battery after applying the primer layer were respectively measured.

The difference between Examples 1-3 is that the volume average particle size Dv50 of active material particles is different; as can be seen from the results of Examples 1-3, when the volume average particle size Dv50 of active substance particles is greater than $2 \mu m$, the thickness of the primer layer will increase as the volume average particle size Dv50 of the active substance particles increases, which can lead to a decrease in the energy density and an increase in the DCR of the secondary battery.

The difference between Example 2 and Examples 4-5 is that the SPAN of the active substance particles is different; as can be seen from the results of Example 1 and Examples 4-5, when the SPAN of the active substance particles is less than 2.8, the filtration time of the primer slurry in the preparation process of the positive electrode sheet is significantly increased and there exists filtration residue, the corrosion risk of the electrolyte to the current collector is increased, and the DCR of the secondary battery is increased; the technicians analyzed the reason, it may be that when the SPAN of the active substance particles is less than 2.8, the active substance particles are easy to agglomerate, which can lead to the generation of filtration residue in the primer slurry and prolong the filtration time, further deteriorate the corrosion of the electrolyte to the current collector, and increase the DCR of the secondary battery.

The difference between Example 2 and Examples 6-7 is that the mass ratio of the active substance particles is different; as can be seen from the results of Example 2 and Examples 6-7, when the mass ratio of the active substance particles in the primer slurry is higher than 10%, the shear strength of the primer layer is reduced, and the corrosion risk of the electrolyte on the positive electrode current collector is increased. The technicians analyzed the reason, it may be due to the fact that the increase in the mass ratio of the active substance particles in the primer slurry leads to a decrease in the shear strength of the primer layer, which further increases the corrosion risk of the electrolyte on the positive electrode current collector.

The difference between Example 2 and Examples 8-10 is that the mass ratio of the binder in the primer slurry is different; as can be seen from the results of Example 2 and Examples 8-10, when the mass ratio of the binder in the primer slurry is lower than 2%, the filtration time of the primer slurry is significantly prolonged and the filtration residue is generated, the shear strength of the primer layer cannot meet the use requirements, and the risk corrosion of the electrolyte on the positive electrode collector is increased; when the mass ratio of the binder in the primer slurry is higher than 10%, the filtration time of the primer slurry is also significantly prolonged and the filtration residue is generated, and at the same time the DCR of the secondary battery is significantly increased.

The difference between Example 11 and Example 2 is that the active substance particles are not added to the primer slurry; as can be seen from the results of Example 2 and Example 11, compared with no active substance particles added in the primer slurry, by adding active substance particles to the slurry can reduce or compensate the loss of energy density caused by setting the primer layer.

The difference between Comparative Examples 1-2 and 9 is that the volume average particle size Dv50 of the positive electrode active material is different; as can be seen from the results of Comparative Examples 1-2 and 9, the larger the volume average particle size Dv50 of the positive electrode active material, the greater the corrosion risk.

The difference between Comparative Examples 3-4 and 9 is that the compacted density of the positive electrode sheet is different; as can be seen from the results of Comparative Examples 3-4 and 9, the greater the compacted density of the positive electrode sheet, the greater the corrosion risk.

The difference between Comparative Examples 5-6 and 9 is that the upper limit voltage used by the secondary battery is different; as can be seen from the results of Comparative Examples 5-6 and 9, the higher the upper limit voltage used by the secondary battery, the greater the corrosion risk.

The difference between Comparative Examples 7-9 is that the mass ratio of LiFSI in the electrolyte is different; as can be seen from the results of Comparative Examples 7-9, the greater the mass ratio of LiFSI in the electrolyte, the greater the corrosion risk.

The above is only specific embodiments of the present disclosure, but the protection scope of the present disclosure is not limited thereto. Any person familiar with the technical field can easily think of various equivalent modifications or replacements, within the technical scope disclosed in the disclosure, which shall be covered within the protection scope of the present disclosure. Therefore, the protection scope of the present disclosure should be based on the protection scope of the claims.

**Claims**

1. A positive electrode sheet, comprising:

   a positive electrode current collector;
   a primer layer, located on at least one side of the positive electrode current collector, comprising a conductive agent and a binder;
   a positive electrode active substance layer, located on one side of the primer layer far away from the positive electrode current collector, comprising a positive electrode active material;
   wherein a thickness of the primer layer is denoted as L, and the thickness of the primer layer satisfies:

   $$0.1 \leqslant \frac{L}{(Dv50-5)*(PD/3.5)} \leqslant 0.5$$ ,

   wherein Dv50 represents a corresponding particle size when a cumulative particle size distribution number of particles in a volume distribution of the positive electrode active material reaches 50%, and a unit of Dv50 is $\mu$m; PD represents a compacted density of the positive electrode sheet, and a unit of PD is $g/cm^3$.

2. The positive electrode sheet according to claim 1, wherein a nickel content in the positive electrode active material is $\geq$80%.

3. The positive electrode sheet according to any one of claims 1 to 2, wherein a volume average particle size Dv50 of the positive electrode active material is denoted as D4, and the volume average particle size Dv50 of the positive electrode active material satisfies: $5\mu m \leq D4 \leq 15\mu m$; optionally, $5\mu m \leq D4 \leq 9\mu m$.

4. The positive electrode sheet according to any one of claims 1 to 3, wherein a mass ratio of the binder and the conductive agent is (2-10):10.

5. The positive electrode sheet according to any one of claims 1 to 4, wherein the binder comprises acrylic resin; optionally, the acrylic resin comprises one or more of cross-linked polyacrylic acid, lithium polyacrylate, sodium polyacrylate, and polyacrylic acid-polyacrylonitrile copolymer.

6. The positive electrode sheet according to any one of claims 1 to 5, wherein the conductive agent comprises one or more of acetylene black, carbon black, graphite, Ketjen black and graphene.

7. The positive electrode sheet according to any one of claims 1 to 6, wherein the primer layer further comprises active substance particles.

8. The positive electrode sheet according to claim 7, wherein a volume average particle size Dv10 of the active substance particles is denoted as D1, a volume average particle size Dv50 of the active substance particles is denoted as D2, a volume average particle size Dv90 of the active substance particles is denoted as D3, and the active substance particles satisfy: $D2 \leq 2\mu m$, $(D3-D1)/D2 \geq 2.8$.

9. The positive electrode sheet according to any one of claims 7 to 8, wherein a thickness of the primer layer satisfies:

   $$0.1 \leqslant \frac{(L-D2)}{(Dv50-5)*(PD/3.5)} \leqslant 0.5$$ ;

   wherein D2 represents the volume average particle size Dv50 of the active substance particles.

10. The positive electrode sheet according to any one of claims 7 to 9, wherein the active substance particles comprise one or more of a NCM ternary material, lithium iron phosphate, and a lithium supplement;

    optionally, the NCM ternary material has a chemical formula of $LiNi_xCo_yMn_{1-x-y}O_2$, wherein $0.3 \leq x \leq 1$ and $0 \leq y \leq 0.5$;
    optionally, the lithium supplement comprises one or more of a lithium-containing oxide, a lithium-containing nitride, a lithium-containing sulfide, and a lithium-containing metalate.

11. The positive electrode sheet according to any one of claims 7 to 10, wherein a mass ratio of the binder, the conductive agent and the active substance particles is (2-10):10:(1-10).

12. The positive electrode sheet according to any one of claims 1 to 11, wherein the thickness of the primer layer satisfies: $0<L\leq5\mu m$; optionally, $1\leq L\leq2\mu m$.

13. The positive electrode sheet according to any one of claims 1 to 12, wherein the positive electrode active material comprises lithium nickel cobalt manganese oxide.

14. A secondary battery comprising the positive electrode sheet according to any one of claims 1 to 13.

15. The secondary battery according to claim 14, wherein the secondary battery further comprises an electrolyte containing lithium bis(fluorosulfonyl)imide.

16. An electrical device, comprising the secondary battery according to any one of claims 14 to 15.

4

FIG.1

4

43

42

42

41

FIG.2

FIG.3

FIG.4

## INTERNATIONAL SEARCH REPORT

| International application No. |
| --- |
| **PCT/CN2022/129727** |

| A. | CLASSIFICATION OF SUBJECT MATTER |
| --- | --- |
| | H01M4/13(2010.01)i; H01M10/0525(2010.01)i |

According to International Patent Classification (IPC) or to both national classification and IPC

| B. | FIELDS SEARCHED |
| --- | --- |

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI: 电池, 正极, 阴极, 涂层, 压实密度, 厚度, 粒径, battery, positive electrode, cathode, coat, compacted density, thickness, particle size

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 110943201 A (NINGDE CONTEMPORARY AMPEREX TECHNOLOGY CO., LTD.) 31 March 2020 (2020-03-31) description, paragraphs 2, 40-226, and 247-281 | 1-16 |
| X | CN 110943223 A (NINGDE CONTEMPORARY AMPEREX TECHNOLOGY CO., LTD.) 31 March 2020 (2020-03-31) description, paragraphs 2, 40-179, and 200-232, and figures 6-7 | 1-16 |
| X | WO 2021163926 A1 (NINGDE AMPEREX TECHNOLOGY LTD.) 26 August 2021 (2021-08-26) description, page 1, paragraph 6-page 16, paragraph 1, and figure 1 | 1-16 |
| X | CN 109004170 A (NINGDE AMPEREX TECHNOLOGY LTD.) 14 December 2018 (2018-12-14) description, paragraphs 2 and 23-165, and figures 1-2 | 1-16 |
| A | JP 2002151055 A (NISSAN MOTOR CO., LTD.) 24 May 2002 (2002-05-24) entire document | 1-16 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **21 July 2023** | **22 July 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/129727**

| Patent document cited in search report | | | Publication date (day/month/year) | Patent family member(s) | | | Publication date (day/month/year) |
|---|---|---|---|---|---|---|---|
| CN | 110943201 | A | 31 March 2020 | EP | 3940817 | A1 | 19 January 2022 |
| | | | | WO | 2020211452 | A1 | 22 October 2020 |
| | | | | US | 2022037667 | A1 | 03 February 2022 |
| | | | | CN | 110943201 | B | 26 February 2021 |
| CN | 110943223 | A | 31 March 2020 | WO | 2020211454 | A1 | 22 October 2020 |
| | | | | EP | 3930056 | A1 | 29 December 2021 |
| | | | | EP | 3930056 | B1 | 24 May 2023 |
| | | | | US | 2022037670 | A1 | 03 February 2022 |
| | | | | CN | 110943223 | B | 24 December 2021 |
| WO | 2021163926 | A1 | 26 August 2021 | JP | 2022524169 | A | 28 April 2022 |
| | | | | JP | 7221949 | B2 | 14 February 2023 |
| | | | | EP | 3896769 | A1 | 20 October 2021 |
| | | | | KR | 20210108300 | A | 02 September 2021 |
| | | | | KR | 102488974 | B1 | 13 January 2023 |
| | | | | US | 2021257619 | A1 | 19 August 2021 |
| | | | | CN | 113994513 | A | 28 January 2022 |
| | | | | CN | 113994513 | B | 21 February 2023 |
| | | | | IN | 202027046705 | A | 13 May 2022 |
| CN | 109004170 | A | 14 December 2018 | US | 2019267664 | A1 | 29 August 2019 |
| | | | | US | 10693181 | B2 | 23 June 2020 |
| | | | | US | 2022223903 | A1 | 14 July 2022 |
| | | | | US | 11664528 | B2 | 30 May 2023 |
| | | | | US | 2022223902 | A1 | 14 July 2022 |
| | | | | US | 2020266483 | A1 | 20 August 2020 |
| | | | | US | 11322774 | B2 | 03 May 2022 |
| JP | 2002151055 | A | 24 May 2002 | JP | 4626105 | B2 | 02 February 2011 |
| | | | | EP | 1184918 | A2 | 06 March 2002 |
| | | | | US | 2002028380 | A1 | 07 March 2002 |
| | | | | US | 7138208 | B2 | 21 November 2006 |
| | | | | EP | 1184918 | B1 | 14 October 2009 |
| | | | | DE | 60140163 | D1 | 26 November 2009 |

Form PCT/ISA/210 (patent family annex) (July 2022)